# EUROPÄISCHE PATENTSCHRIFT

(11) **EP 1 343 645 B1**
(45) Veröffentlichungstag und Bekanntmachung des Hinweises auf die Patenterteilung: **12.04.2006**
(21) Anmeldenummer: 01986884.3
(22) Anmeldetag: 14.12.2001
(51) Int. Cl.: B60H 1/22

(54) **FAHRZEUGHEIZGERÄT MIT INTEGRIERTER WÄRMETRÄGER-UMWÄLZPUMPE**
VEHICLE HEATING DEVICE WITH AN INTEGRATED HEAT TRANSFER CIRCULATION PUMP
APPAREIL DE CHAUFFAGE AUTOMOBILE COMPORTANT UNE POMPE DE RECIRCULATION DE CALOPORTEUR INTEGREE

(30) Priorität: 22.12.2000 DE 10064721
(43) Veröffentlichungstag der Anmeldung: 17.09.2003
(73) Patentinhaber: Webasto AG, 82131 Stockdorf (DE)
(72) Erfinder: BÄCHLE, Georg, 82110 Germering (DE)
(74) Vertreter: Wiese, Gerhard
(86) Internationale Anmeldenummer: PCT/EP2001/014798
(87) Internationale Veröffentlichungsnummer: WO 2002/051658

(56) Entgegenhaltungen:
- DE-C- 19 546 262
- GB-A- 2 114 720
- US-A- 5 408 960

## Beschreibung

Die vorliegende Erfindung betrifft ein Fahrzeugheizgerät mit einem Gehäuse, das ein Gehäuseteil aufweist, in dem gemäß dem Oberbegriff des Patentanspruchs 1 eine Pumpe für einen flüssigen Wärmeträger und ein die Pumpe antreibender elektrischer Motor in einem im wesentlichen zylindrischen Aufnahmeraum vollständig aufgenommen sind.

Ein derartiges Fahrzeugheizgerät ist aus der US 5 408 960 A bekannt. Dort ist bei einem elektrischen Motor-Vorheizgerät eines Fahrzeugs der Motor einer Pumpe komplett in einem zentral angeordneten, zylindrischen, von der Heizwicklung umgebenen wasserdichten Gehäuse untergebracht. Für eine Wartung des Elektromotors muss das Heizgerät komplett zerlegt werden.

Bei einem aus der DE 195 46 262 C1 bekannten Fahrzeugheizgerät ist zur einfachen und kompakten Anbindung der Wärmeträger-Umwälzpumpe vorgesehen, dass am Gehäuse des Fahrzeugheizgeräts Einformungen zur wenigstens teilweisen Aufnahme dieser Pumpe dienen, wobei außerdem im Bereich der Einformungen Mittel zur Halterung der Pumpe am Gehäuse angeformt sind.

Aus der DE 36 11 092 A1 ist ein Fahrzeugheizgerät bekannt, bei dem die Fördermittel einer Wärmeträger-Umwälzpumpe in ein stirnseitiges Gehäuseteil des Wärmetauschers integriert sind. Der Antrieb ist in einem separat angeflanschten Gehäuseteil außerhalb der Wärmetauschers angeordnet.

Aus der GB 2 114 720 A ist ein elektrisches Fahrzeugheizgerät bekannt, dessen Pumpe mittels eines in einem zylindrischen geschlossenen Gehäuse-Endstück gelagerten Rotors und eines außerhalb des Gehäuse-Endstücks angeordneten Stators antreibbar ist. Für eine Wartung des Elektromotors muss dort die Pumpe komplett aus dem Heizgerät entfernt werden.

Der vorliegenden Erfindung liegt deshalb die Aufgabe zugrunde, ein Fahrzeugheizgerät der eingangs genannten Art kompakt und wartungsfreundlich auszubilden.

Gelöst wird diese Aufgabe durch ein Fahrzeugheizgerät mit den Merkmalen des Anspruchs 1. Vorteilhafte Weiterbildungen der Erfindung sind in den Unteransprüchen angegeben.

Demnach wird eine Vollintegration der Wärmeträger-Umwälzpumpe in das Gehäuse des Fahrzeugheizgeräts erfindungsgemäß bei gleichzeitiger leichter Zugänglichkeit erreicht. Dabei ist nicht nur das beispielsweise als Flügelrad ausgebildete Fördermittel der Pumpe, sondern auch der bevorzugt als elektronisch kommutierter Motor ausgebildete Antrieb der Pumpe vollständig in einem Aufnahmeraum des Gehäuseteils aufgenommen, der durch eine becherförmige Trennwand in einen den Rotor und das Fördermittel und einen den Stator des Motors aufnehmenden Teilraum unterteilt ist .

Durch die Integration der Pumpe entfällt deren eigenes Gehäuse, da dieses durch die Wände des Aufnahmeraums des Gehäuseteils bereitgestellt wird, wodurch die Anordnung aus Fahrzeugheizgerät und Pumpe noch kompakter als bislang realisiert werden kann. Der Aufnahmeraum für Fördermittel und Antrieb der Pumpe ist durch wenigstens einen lösbar mit dem Gehäuseteil verbundenen Deckel bzw. durch einen Ansaugstutzen verschlossen.

Je nachdem, ob der Ansaugstutzen einstückig mit dem Gehäuseteil des Fahrzeugheizgeräts ausgebildet ist oder nicht, und je nachdem, ob der Motor der Pumpe als Innenläufer-Motor oder als Außenläufer-Motor ausgebildet ist, können Fördermittel und Antrieb entweder von einer Seite des Aufnahmeraums oder von beiden Seiten des Aufnahmeraums aus in diesen eingesetzt werden.

Das Gehäuseteil ist bevorzugt als Metallgussblock ausgebildet. Der Ansaugstutzen ist entweder getrennt vom Gehäuseteil gebildet und mit diesem lösbar verbunden oder einstückig mit dem Gehäuseteil ausgebildet.

Die bei dem elektronisch kommutierten Antrieb der Pumpe zwischen Rotor und Stator vorgesehene becherförmige Trennwand kann vorteilhafterweise einstückig mit der Wandung der Aufnahmebohrung gebildet sein und diese damit in zwei Teile unterteilen, wodurch eine dauerhafte zuverlässige Abdichtung zwischen Rotor und Stator der Pumpe erzielt wird.

Um eine optimale, d.h. steile Pumpenkennlinien zu realisieren, ist außerdem bevorzugt ein Bypass zur Umgehung der Pumpe in das Gehäuseteil integriert.

Nachfolgend wird die Erfindung anhand der Zeichnungen beispielhaft näher erläutert; es zeigt:
- Fig. 1: eine erste Ausführungsform, wobei der Antrieb der Pumpe als Außenläufer-Motor ausgebildet und der Ansaugstutzen dieser Pumpe einstückig mit dem Gehäuseteil gebildet ist,
- Fig. 2: eine zweite Ausführungsform, wobei der Antrieb der Pumpe als Außenläufer-Motor ausgebildet und eine becherförmige Trennwand zwischen Rotor und Stator einstückig mit dem Gehäuseteil in der Aufnahmebohrung ausgebildet ist,
- Fig.3: eine dritte Ausführungsform, wobei der Antrieb der Pumpe als Innenläufer-Motor ausgebildet und die Aufnahmebohrung als einseitig geschlossene Sackbohrung gebildet ist, und
- Fig. 4: eine vierte Ausführungsform, wobei der Antrieb der Pumpe als Innenläufer-Motor ausgebildet und in das Gehäuseteil zusätzlich ein Bypass zur Umgehung der Pumpe integriert ist.

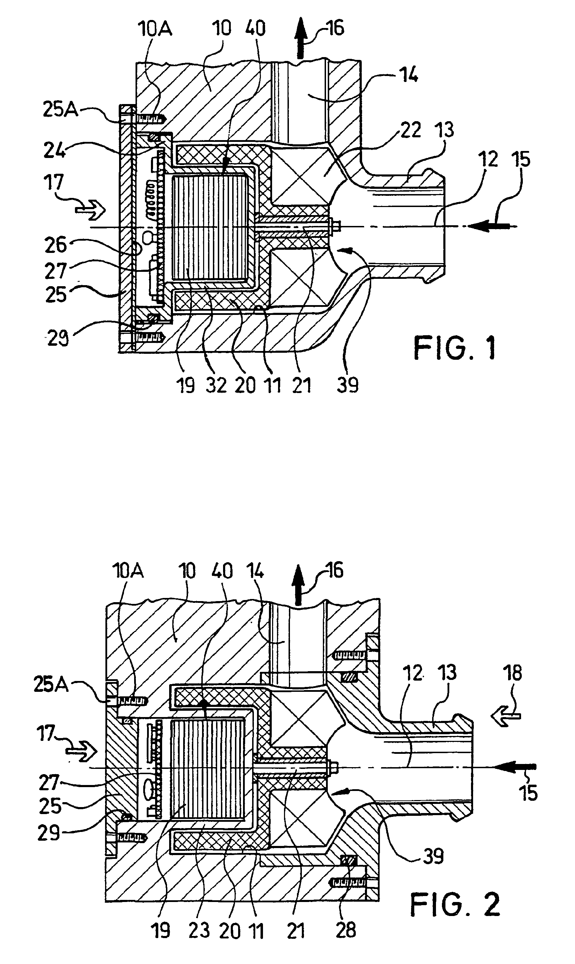

In den Figuren ist lediglich ausschnittsweise ein Gehäuseteil 10 eines Fahrzeugheizgeräts gezeigt, wobei es sich bevorzugt um ein Wärmetauscherteil handelt, das bevorzugt als Metallgussblock ausgebildet ist, und das zusätzlich integral eine Pumpe 39 für einen flüssigen Wärmeträger enthält. Das Gehäuseteil 10 weist eine Aufnahmebohrung als Aufnahmeraum 11 zur axialen Montage eines beispielsweise als Flügelrad 22 ausgebildeten Fördermittels und eines Motors 40 der Pumpe 39 auf. Der Aufnahmeraum 11, der eine Mittel-Längsachse 12 besitzt, bildet demnach den Innenraum eines Gehäuses, und außerdem den Förderraum für den Wärmeträger, den die Pumpe 39 über einen Ansaugstutzen 13 ansaugt und in einen Förderkanal 14 fördert, der mit dem nicht gezeigten Wärmetauscher in Verbindung steht und in Form einer weiteren Bohrung gebildet ist, die senkrecht zum Aufnahmeraum 11 verläuft. Der Ansaugstutzen 13 ist entweder einstückig mit dem Gehäuseteil 10 gebildet (Fig. 1) oder als von diesem getrenntes Teil ausgebildet und lösbar mit diesem verbunden.

In Fig. 1 bis 4 ist die Ansaugrichtung des durch die Pumpe 39 angesaugten Wärmeträgers mit einem Pfeil 15 und die Förderrichtung mit einem Pfeil 16 bezeichnet, während die Montagerichtung der Bestandteile der Pumpe 39 mit einem Pfeil 17 bzw. mit Pfeilen 17 und 18 bezeichnet ist.

Bei der in Fig. 1 gezeigten Ausführungsform ist der Ansaugstutzen 13 einstückig mit dem Gehäuseteil 10 gebildet, und die Montage der Bestandteile der Pumpe 39 erfolgt in Richtung des Pfeils 17 in Fig. 1 von links nach rechts entlang der Mittel-Längsachse 12 der Aufnahmebohrung 11.

Der Antrieb der Pumpe gemäß Fig. 1 wird von einem als Außenläufer-Motor ausgebildeten Motor 40 gebildet und umfaßt einen innen liegenden Stator 19 mit zylindrischer Form und einen diesen umgreifenden becherförmigen Rotor 20. Der Rotor 20 ist am in Fig. 1 rechten Ende buchsenförmig verlängert und sitzt drehbar auf einer Welle 21, die an einer den Rotor 20 vom Stator 19 trennenden becherförmigen Trennwand 32 gelagert ist. Auf dem buchsenförmigen Ende des Rotors 20 ist außen das Fördermittel der Pumpe 39 in Gestalt eines Flügelrads 22 angeordnet, das radial mit dem Förderkanal 14 fluchtet, und auf das der Ansaugstutzen 13 axial einmündet.

Die becherförmige Trennwand 32 ist am in Fig. 1 linken Ende von Stator 19 und Rotor 20 unter Bildung eines Ringflansches 24 radial erweitert, der auf seinem Außenumfang in einer Ringnut einen O-Ring 28 trägt, der an einer radial erweiterten Wandung des Aufnahmeraums 11 dichtend anliegt. Zwischen diesem radial erweiterten Teil des Aufnahmeraums 11 und dem weiter innen liegenden Teil des Aufnahmeraums 11 ist eine Schulter ausgebildet, die zur Anlage des Ringflansches 24 dient, der im übrigen mittels eines Deckels 25 axial fixiert ist, der von außen mittels nicht gezeigter Schrauben gegen das Gehäuseteil 10 geschraubt ist, welche Bohrungen 25 A am Außenrand des Deckels 25 durchsetzen und in Gewindebohrungen im Gehäuseteil 10 eingreifen. Auf der Innenseite des Deckels 25 ist eine Dichtung angeordnet, um den Deckel 25 gegenüber dem Gehäuseteil 10 abzudichten. Diese Dichtung 26 ist bei der in Fig. 1 gezeigten Ausführungsform als Flachdichtung ausgebildet, die sich über die gesamte Innenseite des Deckels 25 erstreckt und damit zwischen dem Deckel 25 und der Außenseite des Gehäuseteils 10 dichtend anliegt.

Im zentralen Teil dient die Dichtung 26 als elektrischer Isolator des aus Metall bestehenden Deckels 25 gegenüber den Bauelementen einer Steuerplatine 27 zur Steuerung der Kommutierung des Motors 40. Diese Steuerplatine 27 ist auf der Innenseite des Ringflansches 24 an der becherförmigen Trennwand 32 befestigt.

Die Montage von Fördermittel und Antrieb der Pumpe bei der Ausführungsform in Fig. 1 erfolgt im vormontierten Zustand in Fig. 1 von der linken Seite aus. Nach dem Einsetzen in den Aufnahmeraum 11 werden die Pumpenteile durch die Montage des Deckels 25 axial in dieser fixiert. Die in Fig. 1 gezeigte Ausführungsform zeichnet sich damit durch eine problemlose Montage der beweglichen und unbeweglichen Pumpenteile aus, wobei eine Montage des Ansaugstutzens 13 sich erübrigt, da dieser integral am Gehäuseteil 10 ausgebildet ist.

Fig. 2 zeigt eine abgewandelte Ausführungsform, wobei mit der Fig. 1 zumindestens in ihrer Funktion übereinstimmende Bauteile mit denselben Bezugsziffern bezeichnet sind.

Auch die bei der Ausführungsform gemäß Fig. 2 zum Einsatz kommende Pumpe 39 wird von einem Außenläufer-Motor 40 angetrieben. Im Gegensatz zu der Ausführungsform von Fig. 1 ist jedoch bei der Ausführungsform gemäß Fig. 2 eine becherförmige Trennwand 23 in den Aufnahmeraum 11 integriert. Das heißt, der Aufnahmeraum 11 ist durch die becherförmige Trennwand 23 axial in zwei Teile unterteilt. Diese Zweiteilung des Aufnahmeraums 11 macht es erforderlich, dass der Stator 19 und die Steuerplatine 27 in Fig. 2 von links in Richtung des Pfeils 17 eingebaut und anschließend durch Montage des Deckels 25 axial fixiert werden, während der becherförmige Rotor 20 zusammen mit dem durch den Rotor 20 getragenen Flügelrad 22 in Fig. 2 von rechts in Richtung des Pfeils 18 montiert wird. Zu diesem Zweck ist der Ansaugstutzen 13 getrennt von dem Gehäuseteil 10 gebildet, und nach Montage des Rotors 20 mit dem Flügelrad 22 am rechten Ende des Aufnahmeraums 11 am Gehäuseteil 10 anbringbar. Zur Abdichtung des Ansaugstutzens 13 gegenüber dem Gehäuseteil 10 dient ein O-Ring 28, der in einer Ringnut auf dem Außenumfang des Ansaugstutzens 13 angeordnet ist.

Im weiteren Unterschied zu der Ausführungsform gemäß Fig. 1 ist der Deckel in der Ausführungsform gemäß Fig. 2 in Art eines in den Aufnahmeraum 11 hineinragenden Stopfens gebildet, und als Dichtmittel für den Deckel 25 dient ein weiterer O-Ring 29, der in einer Ringnut auf dem Außenumfang des in den Aufnahmeraum 11 hineinragenden Teils des Deckels 25 angeordnet ist.

Bei geringfügig größerem Montageaufwand im Vergleich zu der Ausführungsform gemäß Fig. 1 hat die Ausführungsform gemäß Fig. 2 den Vorteil, dass aufgrund der einstückig mit dem Gehäuseteil 10 gebildeten Trennwand 23 eine dauerhaft sichere Abdichtung zwischen Stator 19 und Rotor 20 des Motors 40 der Pumpe 39 gewährleistet ist.

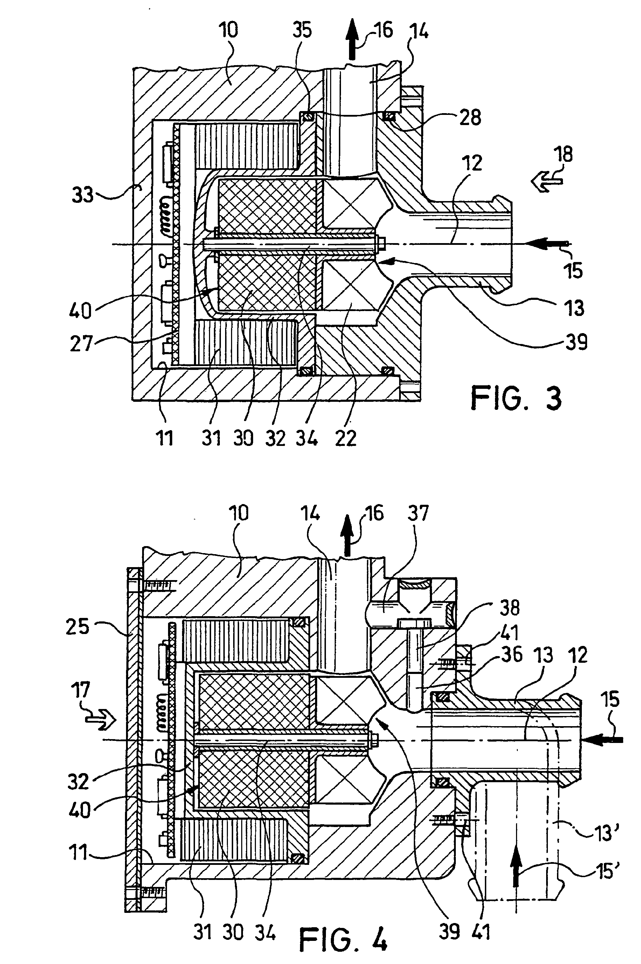

Die im Folgenden erläuterten Ausführungsformen gemäß Fig. 3 und 4 unterscheiden sich von denjenigen gemäß Fig. 1 und 2 dadurch, dass die Pumpe 39 von einem als Innenläufer-Motor ausgebildeten Motor 40 angetrieben wird. Das heißt, das der Rotor 30 als bewegliches Teil des Antriebs der Pumpe innerhalb des Stators 31 angeordnet und von diesem durch eine becherförmige Trennwand 32 getrennt ist.

Fig. 3 zeigt eine Ausführungsform, bei welcher der Aufnahmeraum 11 für die Pumpenbestandteile in Form einer Sackbohrung ausgebildet ist. Das heißt, der Aufnahmeraum 11 weist in Fig. 3 am linken Ende einen Boden 33 auf, der einstückig mit dem Gehäuseteil 10 ausgebildet ist. Die Bestandteile der Pumpe 39 sind daher in Richtung des Pfeils 18 in Fig. 3 von der rechten Seite aus in die Aufnahmebohrung 11 einzusetzen, weshalb der Ansaugstutzen 13 wie bei der Ausführungsform gemäß Fig. 2 getrennt von dem Gehäuseteil 10 gebildet und gegenüber diesem durch einen O-Ring 28 abgedichtet ist.

Der Außendurchmesser des Stators 31 ist geringfügig kleiner als der Innendurchmesser des Aufnahmeraums 11. Die zwischen Rotor 30 und Stator 31 angeordnete becherförmige Trennwand 32 weist mit ihrem Becherboden zum Boden 33 des Aufnahmeraums 11. Auf der Innenseite des Bodens der becherförmigen Trennwand 32 ist eine Welle 34 für den Rotor 30 gelagert, die von der vorderen Stirnseite des Rotors 30 vorsteht und dort das Flügelrad 22 der Pumpe 39 trägt. In dem verbleibenden Hohlraum zwischen dem Boden 33 und der gegenüberliegenden Stirnseite des Stators 31 ist eine Steuerplatine 27 zur elektronischen Kommutierung der Pumpe 39 angeordnet. Diese Steuerplatine 27 ist beispielsweise mit dem Stator 31 fest verbunden, so dass die Steuerplatine 27 gemeinsam mit der vormontierten Einheit aus Stator 31, Trennwand 32, Rotor 30 und Flügelrad 22 vom offenen Ende des Aufnahmeraums 11 aus in Richtung des Pfeils 18 montierbar ist. Die Abdichtung der Trennwand 32 gegenüber der Innenwand des Aufnahmeraums 11 erfolgt mittels eines O-Rings 35, der in einer Ringnut auf dem Außenumfang eines Flanschendes der Trennwand 32 angeordnet ist.

Fig. 4 zeigt eine Abwandlung der Anordnung von Fig. 3, bei der die Montage einer ebenfalls von einem Innenläufer-Motor 40 angetriebenen Pumpe 39 von der linken Seite aus in Richtung des Pfeils 17 erfolgt. Die Anordnung von Fig. 4 entspricht damit insofern der Anordnung von Fig. 1 mit von dem Gehäuseteil 10 getrennten Deckel 25 zum Verschließen des Aufnahmeraums 11 von links. Auch die Anordnung der Steuerplatine 27 entspricht derjenigen von Fig. 1.

Eine Besonderheit der Ausführungsform gemäß Fig. 4 besteht darin, dass der Ansaugstutzen 13 alternativ zu der in Fig. 2 gezeigten Ausführung als gerader Stutzen, der mit der Mittel-Längsachse 12 des Aufnahmeraums 11 fluchtet, hier als gekrümmt verlaufender Stutzen 13' gebildet sein kann, wobei eine alternative Anbringung der Stutzen 13 und 13' problemlos je nach Anwendungsfall erfolgen kann, da diese Stutzen getrennt vom Gehäuseteil 10 gebildet sind.

Eine weitere Besonderheit der Ausführungsform gemäß Fig. 4 besteht darin, dass sie einen Bypass zur Umgehung der Pumpe 39 umfaßt, der durch zwei miteinander in Verbindung stehende Bohrungen 36, 37 im Gehäuseteil 10 gebildet wird. Die Bohrung 36 verläuft parallel zum Förderkanal 14. Sie mündet aus dem an den Ansaugstutzen 13 anschließenden Pumpenraum vor dem Flügelrad 22 aus und mündet andererseits über die Bohrung 37 in den Förderkanal 14 ein. Am Ende der Bohrung 36 zur Bohrung 37 hin ist ein Rückschlagventil 38 angeordnet, das bei normalem Pumpenbetrieb geschlossen ist und zur Aktivierung des Bypass geöffnet wird, so dass in Richtung des Pfeils 15 zuströmender Wärmeträger an der Pumpe 39 vorbei über die Bohrung 36 und die Bohrung 37 in den Förderkanal 14 strömt. Zweck dieses Bypass ist die Realisierung einer optimalen, d.h. steilen Pumpenkennlinie, was zu einer Reduzierung der elektrischen Leistungsaufnahme und der Baugröße der Pumpenteile führt. Durch den Bypass wird der erhöhte Durchflußwiderstand einer optimalen Pumpe bei Fremddurchströmung kompensiert, während andererseits die Strömungsgeschwindigkeit des Wärmeträgers bei Heizbetrieb zur besseren Entlüftung und Vermeidung von Dampfblasenbildung erhöht wird. Eine Fremddurchströmung tritt bei einem Fahrzeugheizgerät beispielsweise dann auf, wenn die Pumpe 39 durch eine vom Antriebsmotor des Fahrzeugs angetriebene stärkere Umwälzpumpe überdrückt wird.

### Bezugszeichenliste

- 10: Gehäuseteil
- 10A: Gewindebohrungen
- 11: Aufnahmeraum
- 12: Mittel-Längsachse
- 13: Ansaugstutzen
- 14: Förderkanal
- 15: Pfeil
- 16: Pfeil
- 17: Pfeil
- 18: Pfeil
- 19: Stator
- 20: Rotor
- 21: Welle
- 22: Fördermittel (Flügelrad)
- 23: Trennwand
- 24: Ringflansch
- 25: Deckel
- 25A: Bohrung
- 26: Dichtung
- 27: Steuerplatine
- 28: O-Ring
- 29: O-Ring
- 30: Rotor
- 31: Stator
- 32: Trennwand
- 33: Boden
- 34: Welle
- 35: O-Ring
- 36: Bohrung
- 37: Bohrung
- 38: Rückschlagventil
- 39: Pumpe
- 40: Motor

## Patentansprüche

1. Fahrzeugheizgerät mit einem Gehäuse, das ein Gehäuseteil (10) aufweist, in dem eine Pumpe (39) für einen flüssigen Wärmeträger und ein die Pumpe antreibender elektrischer Motor (40) in einem im wesentlichen zylindrischen Aufnahmeraum (11) vollständig aufgenommen sind, wobei der Rotor (20, 30) des Motors (40) mit einem Fördermittel (22) der Pumpe verbunden ist, **dadurch gekennzeichnet, dass** der Aufnahmeraum (11) durch eine becherförmige Trennwand (23, 32) in einen den Rotor (20, 30) und das Fördermittel (22) aufnehmenden Teilraum und einen den Stator (19, 31) des Motors (40) aufnehmenden Teilraum unterteilt ist.

2. Fahrzeugheizgerät nach Anspruch 1, **dadurch gekennzeichnet, dass** der Motor (40) als elektronisch kommutierter Motor ausgelegt ist.

3. Fahrzeugheizgerät nach einem der vorhergehenden Ansprüche, **dadurch gekennzeichnet, dass** die Trennwand (23, 32) im Gehäuseteil (10) integriert ausgebildet oder dichtend eingesetzt ist.

4. Fahrzeugheizgerät nach Anspruch 3, **dadurch gekennzeichnet, dass** an der Trennwand (23, 32) eine Lagerung für eine mit dem Rotor (20, 30) verbundene Welle (21, 34) angeordnet ist.

5. Fahrzeugheizgerät nach einem der vorhergehenden Ansprüche, **dadurch gekennzeichnet, dass** in den das Fördermittel (22) der Pumpe (39) aufnehmenden Teilraum des Aufnahmeraums (11) Fluidkanäle (13, 14) für den flüssigen Wärmeträger einmünden.

6. Fahrzeugheizgerät nach einem der vorhergehenden Ansprüche, **dadurch gekennzeichnet, dass** der Aufnahmeraum (11) durch einen lösbar mit dem Gehäuseteil (10) verbunden Deckel (25) verschlossen ist.

7. Fahrzeugheizgerät nach einem der Ansprüche 3 bis 6, **dadurch gekennzeichnet, dass** der Aufnahmeraum (11) als Sackbohrung mit einem einstückig mit dem Gehäuseteil (10) ausgebildeten Boden (33) ausgebildet ist.

8. Fahrzeugheizgerät nach Anspruch 7, **dadurch gekennzeichnet, dass** ein Ansaugstutzen (13) getrennt vom Gehäuseteil (10) gebildet und mit diesem lösbar verbunden ist.

9. Fahrzeugheizgerät nach einem der vorhergehenden Ansprüche, **dadurch gekennzeichnet, dass** die becherförmige Trennwand (32) an einer radialen Verengung des Aufnahmeraums (11) anliegt und gegenüber dessen Wandung abgedichtet ist.

10. Fahrzeugheizgerät nach einem der vorhergehenden Ansprüche, **dadurch gekennzeichnet, dass** in das Gehäuseteil (10) ein ein Rückschlagventil (38) umfassender Bypass (36, 37) zur Umgehung der Pumpe (39) integriert ist.

11. Fahrzeugheizgerät nach einem der vorhergehenden Ansprüche, **dadurch gekennzeichnet, dass** das Gehäuseteil (10) als Metallgussblock ausgebildet ist.

12. Fahrzeugheizgerät nach einem der Ansprüche 1 bis 11, **dadurch gekennzeichnet, dass** das Gehäuseteil (10) zu einem Wärmetauscher gehört.

## Claims

1. Vehicle heating device which has a housing that has a housing part (10) in which a pump (39) for a liquid heat-exchange medium and an electric motor (40) driving the pump are accommodated completely in a substantially cylindrical accommodation space (11), the rotor (20, 30) of the motor (40) being connected to a delivery means (22) of the pump, **characterized in that** the accommodation space (11) is subdivided by a cup-like dividing wall (23, 32) into a part space accommodating the rotor (20, 30) and the delivery means (22), and a part space accommodating the stator (19, 31) of the motor (40).

2. Vehicle heating device according to Claim 1, **characterized in that** the motor (40) is designed as an electrically commutated motor.

3. Vehicle heating device according to one of the preceding claims, **characterized in that** the dividing wall (23, 32) is integrated in the housing part (10) or is inserted in a sealing manner.

4. Vehicle heating device according to Claim 3, **characterized in that** a mounting for a shaft (21, 34) connected to the rotor (20, 30) is arranged on the dividing wall (23, 32).

5. Vehicle heating device according to one of the preceding claims, **characterized in that** fluid ducts (13, 14) for the liquid heat-exchange medium open into the part space of the accommodation space (11) which accommodates the delivery means (22) of the pump (39).

6. Vehicle heating device according to one of the preceding claims, **characterized in that** the accommodation space (11) is closed by a cover (25) detachably connected to the housing part (10).

7. Vehicle heating device according to one of Claims 3 to 6, **characterized in that** the accommodation space (11) is formed as a blind bore having a base (33) formed in one piece with the housing part (10).

8. Vehicle heating device according to Claim 7, **characterized in that** an intake connector (13) is formed separately from the housing part (10) and is detachably connected to the latter.

9. Vehicle heating device according to one of the preceding claims, **characterized in that** the cup-like dividing wall (32) rests on a radial narrowing of the accommodation space (11) and is sealed off with respect to the wall of the latter.

10. Vehicle heating device according to one of the preceding claims, **characterized in that** a bypass (36, 37) comprising a non-return valve (38) for bypassing the pump (39) is integrated into the housing part (10).

11. Vehicle heating device according to one of the preceding claims, **characterized in that** the housing part (10) is formed as a cast metal block.

12. Vehicle heating device according to one of Claims 1 to 11, **characterized in that** the housing part (10) belongs to a heat exchanger.

## Revendications

1. Appareil de chauffage de véhicule doté d'un boîtier qui présente une partie de boîtier (10) dans laquelle une pompe (39) pour un caloporteur liquide et un moteur électrique (40) entraînant la pompe sont intégralement logés dans une zone de logement (11) essentiellement cylindrique, le rotor (20, 30) du moteur (40) étant rattaché à un moyen d'alimentation (22) de la pompe, **caractérisé en ce que** la zone de logement (11) est divisée par une paroi de séparation (23, 32) en forme de godet en une partie accueillant le rotor (20, 30) et le moyen d'alimentation (22) et en une partie accueillant le stator (19, 31) du moteur (40).

2. Appareil de chauffage de véhicule selon la revendication 1, **caractérisé en ce que** le moteur (40) est conçu comme un moteur à commutation électronique.

3. Appareil de chauffage de véhicule selon l'une quelconque des revendications précédentes, **caractérisé en ce que** la paroi de séparation (23, 32) est conçue en étant intégrée dans la partie de boîtier (10) ou est fixée d'une manière assurant l'étanchéité.

4. Appareil de chauffage de véhicule selon la revendication 3, **caractérisé en ce qu'**un logement pour un arbre (21, 34) rattaché au rotor (20, 30) est prévu sur la paroi de séparation (23, 32).

5. Appareil de chauffage de véhicule selon l'une quelconque des revendications précédentes, **caractérisé en ce que** des canaux fluidiques (13, 14) pour le caloporteur liquide débouchent sur la partie de la zone de logement (11) accueillant le moyen d'alimentation (22) de la pompe (39).

6. Appareil de chauffage de véhicule selon l'une quelconque des revendications précédentes, **caractérisé en ce que** la zone de logement (11) est fermée par un couvercle (25) rattaché à la partie de boîtier (10) de façon amovible.

7. Appareil de chauffage de véhicule selon l'une des revendications 3 à 6, **caractérisé en ce que** la zone de logement (11) est conçue comme un trou borgne avec un fond (33) solidaire de la partie de boîtier (10).

8. Appareil de chauffage de véhicule selon la revendication 7, **caractérisé en ce qu'**un embout d'aspiration (13) est formé séparément de la partie de boîtier (10) et rattaché à celui-ci de façon amovible.

9. Appareil de chauffage de véhicule selon l'une quelconque des revendications précédentes, **caractérisé en ce que** la paroi de séparation (32) en forme de godet prend appui sur un resserrement radial de la zone de logement (11) et est étanchéifiée par rapport à la paroi de celle-ci.

10. Appareil de chauffage de véhicule selon l'une quelconque des revendications précédentes, **caractérisé en ce qu'**une dérivation (36, 37) comprenant un clapet anti-retour (38) et permettant de contourner la pompe (39) est intégrée dans la partie de boîtier (10).

11. Appareil de chauffage de véhicule selon l'une quelconque des revendications précédentes, **caractérisé en ce que** la partie de boîtier (10) est conçue sous forme de bloc coulé en métal.

12. Appareil de chauffage de véhicule selon l'une des revendications 1 à 11, **caractérisé en ce que** la partie de boîtier (10) fait partie d'un échangeur thermique.
